# EUROPEAN PATENT SPECIFICATION

(11) **EP 4 162 914 B1**
(45) Date of publication and mention of the grant of the patent: **28.01.2026**
(21) Application number: 21817284.9
(22) Date of filing: 04.06.2021
(51) Int. Cl.: A61H 1/00, B25J 9/00, A61H 1/02, A61H 3/00, A63B 21/00, A63B 22/00

(54) **REHABILITATION DEVICE**
REHABILITATIONSVORRICHTUNG
APPAREIL DE RÉÉDUCATION

(30) Priority: 05.06.2020 ES 202030537
(43) Date of publication of application: 12.04.2023
(73) Proprietor: Tecnimusa S.L., 30320 Fuente Alamo (ES)
(72) Inventor: GARCIA LEGAZ, Juan, 30320 Fuente Alamo (ES)
(74) Representative: Díaz Pacheco, Maria Desamparados
(86) International application number: PCT/ES2021/070411
(87) International publication number: WO 2021/245317

(56) References cited:
- CN-A- 101 862 256
- CN-A- 101 862 256
- CN-A- 107 351 057
- CN-A- 107 351 067
- KR-A- 20180 083 825
- KR-A- 20180 083 825
- US-A1- 2012 172 770
- US-A1- 2014 100 491
- US-A1- 2014 142 470
- US-A1- 2015 025 423
- US-B2- 10 292 892

## Description

### OBJECT OF THE INVENTION

As expressed in the title of the present specification, the invention relates to a rehabilitation apparatus which provides the intended function thereof with advantages and features that will be described in detail below and represent an improvement of the current state of the art.

The object of the present invention relates to an apparatus the purpose of which is to allow the rehabilitation of people unable to walk properly as a result of damage to the central nervous system, such that it enables a more functional and efficient ambulation in said people. The problem to be solved relates to spine and upper and lower limb rehabilitation, increasing flexibility and strengthening trunk and lower limb extensor muscles, for the purpose of providing people with the capabilities required to get up from lying down and sitting up, to staying upright and moving around independently.

### FIELD OF APPLICATION OF THE INVENTION

The field of application of the present invention is comprised within the sector of the industry dedicated to the manufacture of rehabilitation apparatuses, focusing particularly on apparatuses intended for the rehabilitation of people unable to walk.

### BACKGROUND OF THE INVENTION

As is known, when a person has suffered a stroke (ischemic or hemorrhagic) a part of his/her brain or spinal cord is deprived of oxygen and glucose, resulting in permanent damage that can translate into a loss of a series of functions depending on the area affected and the extent of the damage. If the injured part of the nervous system is responsible for triggering or controlling the movement of a body part, particularly the limbs on the other side, the motor deficit will lead to a partial or total disability of the subject to ambulate. The subject will suffer right-sided hemiparesis if strokes affect left motor areas and left-sided hemiparesis if they affect right motor areas. In the first hours and days after stroke, the objective is to preserve life and try to reduce the damaged area of the brain as much as possible by controlling oxygenation, blood glucose, blood pressure, blood volume, intracranial hypertension, cerebral perfusion, etc. Once the patient is stabilized, a detailed evaluation is carried out to assess not only motor deficits but also sensory deficits, cognitive deficits, etc. Once assessed, a multidisciplinary therapy is carried out with active movements of the patient and, if this is not possible, with passive movements, in order to prevent atrophy and facilitate brain plasticity phenomena in the uninjured areas.

Current rehabilitation programs consist fundamentally of the application of certain physical therapy, occupational therapy, and speech therapy techniques, depending on the type and degree of disability, which can be used alone or in combination (conventional techniques, neuromuscular facilitation techniques, biofeedback techniques, etc.). To date, there is no scientific evidence that some physical therapy techniques are better than others.

There is evidence that in those first moments after a stroke in which the brain is still in the recovery phase, rehabilitation of the affected part is initiated; hence the present invention is proposed. Rehabilitation is fundamental for people to be able to walk again and lead a normal life.

At present, the rehabilitation that is often performed is fundamentally external passive rehabilitation, in which the physical therapist mobilizes the joints and muscles of the part affected by a stroke without the subject actively participating in said movements. This rehabilitation performed in most hospitals and clinics seeks to minimize the deficits or disabilities experienced by the patient who has suffered a stroke, as well as to facilitate his/her social reintegration.

That said, rehabilitation should be an active process which requires the collaboration and learning capability of the patient and his/her family.

However, there are some specialized centers in which neurorehabilitation is carried out for these patients who have suffered a functional deficit after a stroke. This is a multidisciplinary and coordinated treatment the objective of which is the neurological and functional recovery of the patient. To that end, motor and cognitive functions are worked on, establishing goals to be achieved.

Therapeutic protocols deal with several aspects: the body part to be trained (upper and lower extremities), the tools or machines to be used for such training (treadmills, weights, etc.), the activity to be performed (walking, moving the upper limb), and the therapy start time (during the acute phase after a stroke).

A review of experience-dependent neuroplasticity (Keim and Jones, 2008) explains why training is crucial for recovery. According to this paper, exposure to specific training activities leads to deficit improvement by activating neuroplasticity mechanisms.

Two meta-analyses investigated specific principles of rehabilitation. One of them analyzed the principle of intensity and found that longer therapy time resulted in better functional recovery (Kwakkel, 2009). The other study determined that repetition enhances upper and lower limb function (Thomas *et al.,* 2017).

A recent meta-analysis (Maier *et al.,* 2019) provides a list of principles for neurorehabilitation based on the literature on motor learning and recovery: massed practice, task-specific practice, variable practice, multisensory stimulation, increasing difficulty, explicit feedback/knowledge of results, implicit feedback/knowledge of the work performed, movement representation, and promotion of the use of the affected limb. **In** this way, this meta-analysis maintains that a treatment which combines intensive practice with multisensory stimulation and increasing difficulty may be beneficial for recovery.

Functional recovery is greater in the first month, is maintained until the third month, is less between the third and sixth month, and undergoes progressively smaller changes between the sixth and twelfth month. As a general rule, it is established that stabilization of the condition occurs from the sixth month onwards. Language and balance may continue to improve even after 2 years.

This active rehabilitation apparatus for the active rehabilitation of the part affected by a stroke, taking advantage and making use of the non-affected body part, thereby promoting neuroplasticity, is proposed as a result of these rehabilitation periods.

In the state of the art, there are electromechanical device-based proposals aimed at such patients. These are body exoskeletons which have been developed for medical, military, and civilian purposes.

Currently, various companies and higher research centers continue to study, work on, and attempt to develop different ways of trying to recover body mobility through exoskeletons, but they have run into several obstacles.

No active rehabilitation apparatus which takes advantage of the non-affected part and of the capability of the affected person himself/herself can be clearly identified; it is always an external professional or another device which acts externally on the patient's muscles and joints.

Up until now, the method comprises the following steps of rehabilitation treatment:
- A first phase called the acute phase:
   - Postural care.
   - Passive mobilization of the affected limbs and instruction of self-passive mobilization (performed by the patient himself/herself with the help of the healthy side).
   - Respiratory physical therapy, postural drainage, clapping, etc.
   - Proprioceptive and sensory stimulation of the affected hemibody.
   - Start sitting up as soon as possible (48-72 hours after ACVA) with the upper limb in a sling while flaccid.
- The subacute and chronic phase:
   - First, an attempt to achieve sitting balance and progressive adaptation to verticality.
   - Active exercises of those muscle groups with voluntary movements.
   - Use of proprioceptive neuromuscular stimulation techniques.
      Inhibition of spasticity by means of relaxation techniques, joint mobilizations, heat - cold, etc.
   - Walking re-education: along with the assistance of a physical therapist, with a cane over uneven terrain and independently according to the capabilities of each patient.
   - Occupational therapy to improve coordination and manual dexterity so as to achieve independence in basic activities of daily living (dressing, going to the toilet, eating), information on home adaptations, etc.

The objective of the present invention is, therefore, to develop a rehabilitation apparatus which, as indicated above, unlike what is known today, provides active rehabilitation of the part affected by a stroke by taking advantage and making use of the non-affected body part.

Moreover, and as a reference to the current state of the art, it should be mentioned that among the many known rehabilitation apparatuses, the existence of the following documents as documents closest to the object of the invention, is known:
- Patent CN206612924U relates to a "Novel medical rehabilitation training car", basically consisting of a vehicle formed by a securing structure with swivel walker-type wheels, with which the patient can move around.
- Patent CN104606030A relates to a "Lower limb on-line walking rehabilitation system and method fused with autokinetic movement consciousness". This patent basically relates to a Hocoma-type exoskeleton but with a neural helmet. The system essentially comprises a brain-computer interface, a force function generator, and a lower limb external skeleton. The brain-computer interface decodes autokinetic movement intensity and sends an instruction to the force function generator in real time.
- Patent CN106176138A relates to a lower limb rehabilitation training bed.
- Patent US10099085B2 relates to a multi-limb exercise machine and a limb rehabilitation method by means of reward bias that includes a plurality of user-movable input components, an input measurement device associated with each of the input components, a feedback device for providing the user with output information that indicates the difference between a current performance level and a performance target, and a processor that receives input information about user effort applied to each of the input components and communicates the output information to the feedback device. The input components are configured to be moved by a limb of a user and to resist being moved.
- Patent CA2571240A1 relates to a "Walking and balance exercise device", basically consisting of a pelvic structure (vehicle) which moves as the patient walks.
- Patent AU2014244363A1 relates to a "Powered orthotic system" basically consisting of an exoskeleton including crutches.
- Patent DE102014004997A1 relates to a Hocoma^{®}-type apparatus with the user hanging from the apparatus which includes a motor-driven treadmill.
- Patent CN106691782A relates to a harness for securing the individual at the hip.
- Patent WO2017081647A1 relates to a device which holds the legs of the user and moves them on a treadmill.
- Patent KR100976180B1 relates to an exoskeleton with a harness and a treadmill.
- Patent DE19805164C1 relates to an apparatus device with two foot pedals that moves the legs of the user who is hanging from a harness.
- Patent US2015018177A1 relates to a system for transitioning from sitting to standing.
- Patent EP3104819A1 relates to a lower part exoskeleton with a structure with which the user can sit down and stand up.

However, it does not appear that any of the mentioned patents, taken separately or in combination, describes a rehabilitation apparatus which has technical and structural features that are the same as or similar to those of the apparatus herein claimed.

Document KR20180083825A discloses a rehabilitation robot for a lower extremity.

Document US10292892B2 discloses a pneumatic lower extremity gait rehabilitation training system.

Document CN107351067A discloses a doctor posture keeping assisting system applied in an operation.

Document US2014142470A1 discloses a method and apparatus used for rehabilitation and training of an injured limb.

### DESCRIPTION OF THE INVENTION

The rehabilitation apparatus is defined by the claims accompanying the present description.

Specifically, as set forth above, the invention proposes an apparatus for the rehabilitation of people unable to move their limbs and/or to walk properly as a result of damage to the central nervous system, such that it enables a more functional and efficient ambulation in said people, particularly for spine and upper and lower limb rehabilitation, increasing flexibility and strengthening trunk and lower limb extensor muscles, for the purpose of providing people with the capabilities required to get up from lying down and sitting up, to staying upright and moving around independently, said apparatus having the particularity of being based on an active rehabilitation of the affected part by taking advantage and making use of the non-affected body part.

To that end, and more specifically, the apparatus of the invention is essentially configured from a motor-driven vehicle and a lower and upper limb exoskeleton having motor-driven means for moving an affected part of any of the limbs of the patient by means of the movement of a non-affected part of any other limb.

To that end, and more specifically, the motor-driven vehicle in turn comprises the following elements:
- A lifting and anchoring system for anchoring to the exoskeleton so as to provide stability and to enable safely transitioning from a seated position to a standing position.
- A series of batteries and electrical elements which are connected to the exoskeleton for the operation thereof.
- A non-motor driven treadmill that is extensible and couplable below the vehicle.
- And, preferably, a display for viewing movements in real time.

Meanwhile, the lower and upper limb exoskeleton in turn comprises:
- Motor-driven elements which allow the movement of joints.
- Control elements which command the movement of motors.
- Securing elements for securing the patient to the exoskeleton.

Specifically, said elements are arranged such that the part of the exoskeleton located in the affected part of the body has motors which allow the movement of joints, and the opposite part of the exoskeleton (the one which is located on the non-affected side) has a series of measuring elements, specifically encoders, which collect information about the voluntary movement of the subject and transfer same to the motors which generate the movement.

The movement is always controlled through a software program, where operating parameters are established, which thereby allows limiting the degrees of freedom, speed of movement, and resistance.

It is important to highlight that it is always the patient himself/herself who starts and generates the movement voluntarily and intentionally, which has a direct bearing on the basic principles of neuroplasticity.

Based on the foregoing, the performance and advantages provided by the apparatus are as follows:
Securing the exoskeleton donned by the user to the vehicle allows stabilizing the user and preventing falls. The vehicle's lifting system allows the subject to transition from a sitting position to a standing position.

The apparatus has a non-mechanized treadmill whereby it is the user who moves the treadmill autonomously and voluntarily. This treadmill is stored in the lower part of the vehicle when not in use.

Preferably, the apparatus has a display that is located facing the user where the user can watch himself/herself perform his/her own movements through a camera also installed facing the user to that end.

However, the form of control and movement should be pointed out in particular given that, unlike most existing apparatuses and systems, it is the user's own healthy part that controls both the upper and the lower affected part through encoders which are strategically installed in the exoskeleton and receive the movement from the healthy side, there also being arranged motors which, located in positions similar to those of the encoders on the opposite healthy side, receive information from these encoders and perform the same movement on the affected side.

Furthermore, it is important to indicate that the apparatus can be arranged so that it can be used interchangeably with the right side or the left side as the healthy side and vice versa.

In the preferred embodiment, each section and joint moves the corresponding joint of the opposite side, therefore, in a preferred embodiment of the apparatus, the exoskeleton has encoders and motors required for:
- the heathy shoulder on one side, for example the right shoulder, to control the affected shoulder on the other side, in this case the left side,
- the healthy elbow to control the affected elbow,
- the healthy hand to control the affected hand,
- the healthy hip to control the affected hip,
- the healthy knee to control the affected knee, and
- the healthy ankle to control the affected ankle.

Optionally, the apparatus is provided for being able to cross-reference information such that, if required, a single limb can control the other limbs or an arm can control a leg and vice versa.

Finally, it should be indicated that, optionally, the apparatus can also be used without the exoskeleton, such that the user can move around with the motor-driven vehicle bearing an upper securing, for example with a harness and slings, making it possible for the individual to walk on the treadmill or on the ground, without help but with total safety while walking.

### DESCRIPTION OF THE DRAWINGS

To complement the description that is being made and for the purpose of helping to better understand the features of the invention, drawings are attached to the present specification as an integral part thereof in which the following is depicted in a non-limiting, illustrative manner:
Figure 1 shows a schematic front elevational view of the exoskeleton comprising the rehabilitation apparatus of the invention, depicted on a dummy serving as a user's body.
Figure 2 shows a schematic side elevational view of the user with the exoskeleton, once secured to the vehicle, in which the assembly of the apparatus and the main parts it comprises can be seen with the user in the standing position on the non-motor driven treadmill.
Figure 3 shows a side view of the apparatus with the user in a seated position, in this case without the treadmill.

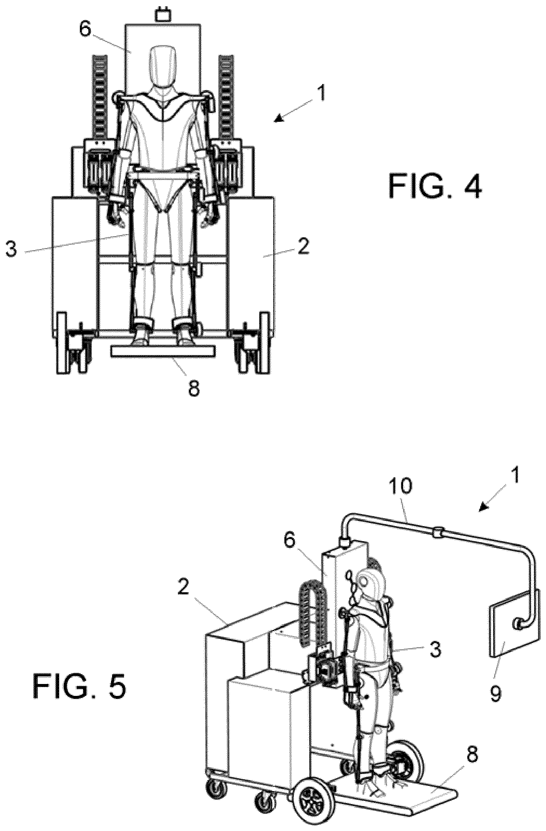

Figure 4 shows a front view of the apparatus with the user in the standing position.
Figure 5 shows a perspective view of the apparatus, in this case including the display with a camera on which the user can watch himself/herself in real time.
Figures 6 and 7 show respective front elevational and side views, respectively, of the vehicle with the user secured thereto through a harness and slings, without using the exoskeleton.

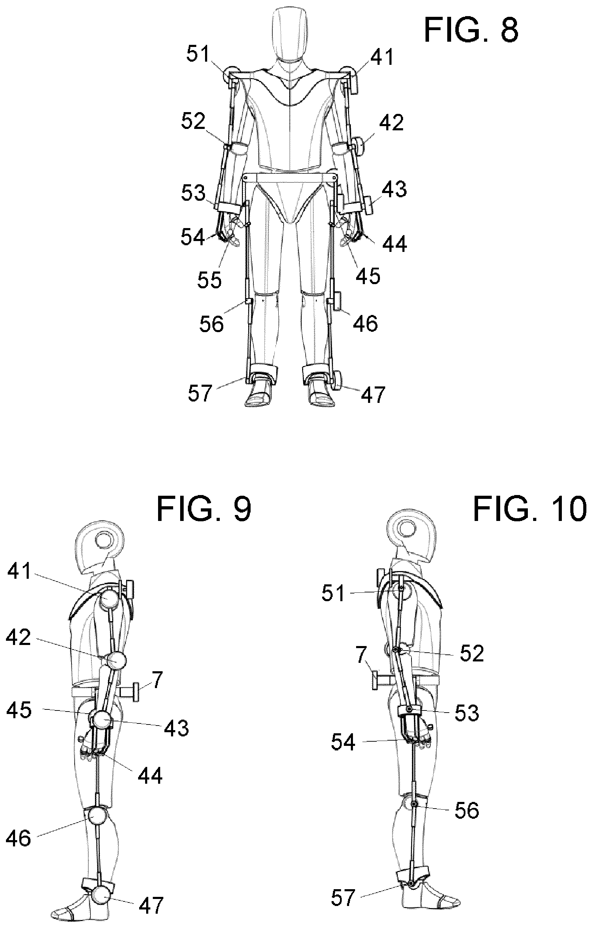

Furthermore, Figures 8, 9, and 10 show respective front elevational, left side, and right side views of the exoskeleton, indicating the plurality of encoders and motors which it may incorporate in different parts of both upper and lower limbs.

### PREFERRED EMBODIMENT OF THE INVENTION

In view of the mentioned figures, and according to the numbering used, a non-limiting embodiment of the rehabilitation apparatus of the invention which comprises what is described in detail below, can be seen therein.

In that sense, as seen in said figures, the apparatus (1) of the invention essentially comprises a motor-driven vehicle (2) and an exoskeleton (3) which in turn comprises at least one electric motor (4) coupled to a part of the exoskeleton (3), located in correspondence with an affected part of a patient's/user's limb, and at least one encoder (5), or similar movement measurement device, coupled to another part of the exoskeleton in coincidence with a non-affected part of the patient's another limb, both elements, i.e. said motor (4) and said encoder (5), being designed so that they can be connected to an electronic control with specific software such that the movement performed by the user with his/her non-affected part, which is detected and measured in the encoder (5), is reproduced in the affected part through the motor (4) thereof.

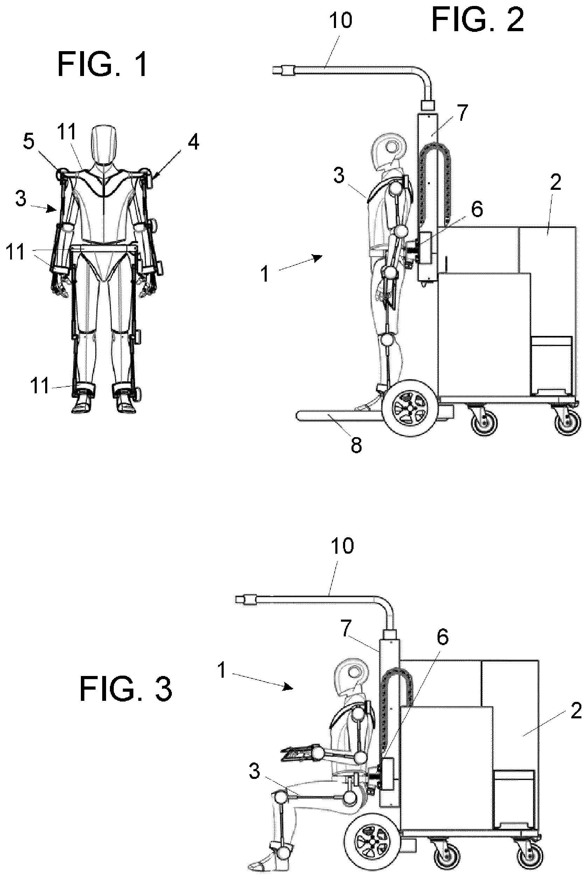

Furthermore, preferably, the motor-driven vehicle (2) in turn comprises an anchoring system (6) for anchoring to the exoskeleton (3) so as to integrally attach both elements and provide stability, and a lifting system (7), for example through a chain which moves the anchoring point (6) in a vertical movement, so as to allow the user to be able to safely transition from a standing position (Figure 2) to a seated position (Figure 3).

Preferably, the motor-driven vehicle has batteries and electrical elements which are connected to the exoskeleton (3), for example through the anchoring point (6) itself, so as to supply it with power and achieve the operation thereof.

Preferably, the motor-driven vehicle (2) has a non-motor driven treadmill (8), which is preferably an extensible type and couplable below the vehicle.

Preferably, the motor-driven vehicle (2) furthermore has a display (9) and a camera which is arranged, for example through an upper support (10), facing the user once he/she is on the vehicle (2), for viewing movements in real time.

**In** turn, the exoskeleton (3), which is preferably a structure which encompasses both the lower limbs and the upper limbs of the user, in addition to one or more motors (4) linked to one or more encoders (5), comprises several securing means (11) for securing the patient to the exoskeleton, for example by means of belts at the shoulders, waist, wrists, and ankles, so as to secure each of the patient's limbs thereto, as seen in Figure 1.

Figures 8, 9, and 10 show how, in a preferred embodiment, the exoskeleton (3) comprises a plurality of encoders (51, 52, 53, 54, 55, 56, 57) controlling respective motors (41, 42, 43, 44, 45, 46, 47), with said encoders and motors being arranged as follows:
- a shoulder encoder (51) in an upper limb which controls a shoulder motor (41) in the other upper limb,
- an elbow encoder (52) in an upper limb which controls an elbow motor (42) in the other upper limb,
- a wrist encoder (53) in an upper limb which controls a wrist motor (43) in the other upper limb,
- a hand encoder (54) in an upper limb which controls a hand motor (44) in the other upper limb,
- a hip encoder (55) in a lower limb which controls a hip motor (45) in the other lower limb,
- a knee encoder (56) in a lower limb which controls a knee motor (46) in the other lower limb, and
- an ankle encoder (57) in a lower limb which controls an ankle motor (45) in the other lower limb.

Logically, the foregoing description represents merely one possible embodiment, where it is possible for there to be other embodiments in which two or more of the mentioned elements are combined, and in which cross-referencing of information may occur such that, if required, one or two encoders (5) located in a single limb of the exoskeleton can control one or more motors (4) located in the other limbs, regardless of whether they are upper or lower limbs.

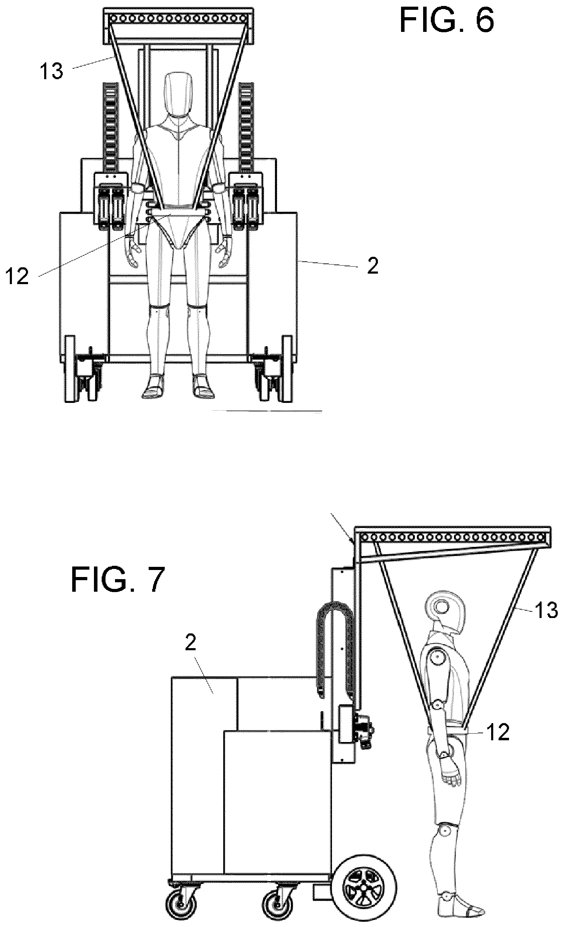

Finally, Figures 6 and 7 show how the apparatus allows the use of the motor-driven vehicle (2) without the exoskeleton, for which it comprises securing consisting of a harness (12) and a sling (13).

Having sufficiently described the nature of the present invention, as well as the way of putting it into practice, it is not considered necessary to expand on this explanation so that one skilled in the art will understand its scope and the advantages derived from it.

## Claims

1. A rehabilitation apparatus, applicable for the rehabilitation of people unable to move their limbs and/or walk properly as a result of damage to the central nervous system, and comprising a motor-driven vehicle (2) and an exoskeleton (3), wherein the exoskeleton comprises at least one electric motor (4) coupled to a part of the exoskeleton (3) located in correspondence with an affected part of a patient's/user's limb, and at least one encoder (5), or similar movement measurement device, coupled to another part of the exoskeleton in coincidence with a non-affected part of the patient's another limb; and wherein said motor (4) and said encoder (5) are provided with means so that they can be connected to an electronic control with specific software such that the movement performed by the user with his/her non-affected part, which is detected and measured in the encoder (5), is reproduced in the affected part through the motor (4) thereof,
**characterized in that** the motor-driven vehicle (2) comprises an elevation device comprising an anchoring system (6) attached to a lifting system (7), wherein the lifting system (7) comprises a chain configured to move the anchoring system (6) vertically, and the anchoring system (6) is configured to anchor the exoskeleton (3), thereby assisting the user when transitioning between a standing position and a sitting position;
**and further in that** the motor-driven vehicle (2) comprises a non-motor driven extensible treadmill (8) configured to be stored under said motor-driven vehicle (2) when not in use.

2. The rehabilitation apparatus according to claim 1, wherein the motor-driven vehicle (2) comprises batteries and electrical elements which are connected to the exoskeleton (3) for power supply and operation.

3. The rehabilitation apparatus according to any of the preceding claims, wherein the motor-driven vehicle (2) comprises a display (9) arranged facing the user, once he/she is on the vehicle (2), for viewing movements in real time.

4. The rehabilitation apparatus according to any of the preceding claims, wherein the exoskeleton (3) is a structure which encompasses both the lower limbs and the upper limbs of the user.

5. The rehabilitation apparatus according to claim 4, wherein the exoskeleton (3) comprises one or more motors (4) linked to one or more encoders (5) and several securing means (11) for securing the patient to the exoskeleton, at the shoulders, waist, wrists, and ankles, so as to secure each of the patient's limbs thereto.

6. The rehabilitation apparatus according to claim 5, wherein the exoskeleton (3) comprises:
- a shoulder encoder (51) in an upper limb which controls a shoulder motor (41) in the other upper limb,
- an elbow encoder (52) in an upper limb which controls an elbow motor (42) in the other upper limb,
- a wrist encoder (53) in an upper limb which controls a wrist motor (43) in the other upper limb,
- a hand encoder (54) in an upper limb which controls a hand motor (44) in the other upper limb,
- a hip encoder (55) in a lower limb which controls a hip motor (45) in the other lower limb,
- a knee encoder (56) in a lower limb which controls a knee motor (46) in the other lower limb, and
- an ankle encoder (57) in a lower limb which controls an ankle motor (45) in the other lower limb, or
- a combination of any of the aforementioned encoders and motors.

7. The rehabilitation apparatus according to claim 5, wherein the exoskeleton (3) comprises one or two encoders (5) located in a limb which controls one or more motors (4) located in the other limbs, regardless of whether they are upper or lower limbs.

8. The rehabilitation apparatus according to any of the preceding claims, further comprising securing means consisting of a harness (12) coupled to a sling (13).

## Patentansprüche

1. Rehabilitationsgerät, welches für die Rehabilitation von Menschen, welche nicht in der Lagen sind deren Gliedmaßen zu bewegen und/oder richtig zu laufen als Ergebnis von einem Schaden im zentralen Nervensystem, anwendbar ist, und welches ein motorisch angetriebenes Fahrzeug (2) und ein Exoskelett (3) umfasst, wobei das Exoskelett mindestens einen Elektromotor (4), welcher mit einem Teil des Exoskeletts (3) gekoppelt ist, welches sich entsprechend einem betroffenen Teil einer Gliedmaße eines Patienten/einer Patientin/eines Benutzers/einer Benutzerin befindet, und mindestens einen Codierer (5), oder eine ähnliche Bewegungsmessvorrichtung, welcher mit einem anderen Teil des Exoskeletts in Übereinstimmung mit einem nicht betroffenen Teil der anderen Gliedmaße des Patienten/der Patientin gekoppelt ist, umfasst; und wobei der genannte Motor (4) und der genannte Codierer (5) mit Mitteln versehen sind, damit sie mit einer elektronischen Steuerung mit spezifischer Software verbunden werden können, sodass die vom Benutzer/von der Benutzerin mit seinem/ihrem nicht betroffenen Teil durchgeführte Bewegung, welche im Codierer (5) detektiert und gemessen wird, im betroffenen Teil über den Motor (4) desselben nachgebildet wird,
**dadurch gekennzeichnet, dass** das motorisch angetriebene Fahrzeug (2) eine Hebevorrichtung umfasst, welche ein Verankerungssystem (6) umfasst, welches an einem Hubsystem (7) befestigt ist, wobei das Hubsystem (7) eine Kette umfasst, welche dazu ausgebildet ist, das Verankerungssystem (6) vertikal zu bewegen, und das Verankerungssystem (6) dazu ausgebildet ist, das Exoskelett (3) zu verankern, wodurch der Benutzer/die Benutzerin unterstützt wird, wenn er/sie zwischen einer Stehposition und einer Sitzposition wechselt;
und zusätzlich, dass das motorisch angetriebene Fahrzeug (2) ein nicht motorisch angetriebenes ausziehbares Laufband (8) umfasst, welches dazu ausgebildet ist, unter dem genannten motorisch angetriebenen Fahrzeug (2), wenn es nicht verwendet wird, gelagert zu werden.

2. Rehabilitationsgerät nach Anspruch 1, wobei das motorisch angetriebene Fahrzeug (2) Batterien und elektrische Elemente umfasst, welche mit dem Exoskelett (3) für die Stromversorgung und den Betrieb verbunden sind.

3. Rehabilitationsgerät nach einem der vorhergehenden Ansprüche, wobei das motorisch angetriebene Fahrzeug (2) einen Bildschirm (9) umfasst, welcher dem Benutzer/der Benutzerin zugewandt angeordnet ist, wenn er/sie einmal auf dem Fahrzeug (2) ist, um Bewegungen in Echtzeit zu sehen.

4. Rehabilitationsgerät nach einem der vorhergehenden Ansprüche, wobei das Exoskelett (3) eine Struktur ist, welche sowohl die unteren Gliedmaßen und die oberen Gliedmaßen des Benutzers/der Benutzerin umgreift.

5. Rehabilitationsgerät nach Anspruch 4, wobei das Exoskelett (3) einen oder mehrere Motoren (4), welche mit einem oder mehreren Codierern (5) verknüpft sind, und mehrere Sicherungsmittel (11) zum Sichern des Patienten/der Patienten am Exoskelett, an den Schultern, an der Taille, an den Handgelenken und an den Knöcheln, um jeder der Gliedmaßen des Patienten/der Patientin daran zu sichern, umfasst.

6. Rehabilitationsgerät nach Anspruch 5, wobei das Exoskelett (3) Folgendes umfasst:
- einen Schultercodierer (51) in einer oberen Gliedmaße, welcher einen Schultermotor (41) in der anderen oberen Gliedmaße steuert,
- einen Ellbogencodierer (52) in einer oberen Gliedmaße, welcher einen Ellbogenmotor (42) in der anderen oberen Gliedmaße steuert,
- einen Handgelenkcodierer (53) in einer oberen Gliedmaße, welcher einen Handgelenkmotor (43) in der anderen oberen Gliedmaße steuert,
- einen Handcodierer (54) in einer oberen Gliedmaße, welcher einen Handmotor (44) in der anderen oberen Gliedmaße steuert,
- einen Hüftecodierer (55) in einer unteren Gliedmaße, welcher einen Hüftemotor (45) in der anderen unteren Gliedmaße steuert,
- einen Kniecodierer (56) in einer unteren Gliedmaße, welcher einen Kniemotor (46) in der anderen unteren Gliedmaße steuert, und
- einen Knöchelcodierer (57) in einer unteren Gliedmaße, welcher einen Knöchelmotor (45) in der anderen unteren Gliedmaße steuert, oder
- eine Kombination aus irgendeinem der oben erwähnten Codierer und Motoren.

7. Rehabilitationsgerät nach Anspruch 5, wobei das Exoskelett (3) einen oder zwei Codierer (5) umfasst, welcher/welche sich in einer Gliedmaße befindet/befinden, welcher/welche einen oder mehrere Motoren (4) steuert/steuern, welcher/welche sich in den anderen Gliedmaßen befindet/befinden, unabhängig davon, ob sie obere oder untere Gliedmaßen sind.

8. Rehabilitationsgerät nach einem der vorhergehenden Ansprüche, zusätzlich umfassend Sicherungsmittel welche aus einem Gurtzeug (12), welches mit einen Hängeseil (13) gekoppelt ist, bestehen.

## Revendications

1. Appareil de rééducation, applicable pour la rééducation de personnes incapables de déplacer leurs membres et/ou de marcher correctement en raison de dommage au système nerveux central, et comprenant un véhicule entraîné par moteur (2) et un exosquelette (3), dans lequel l'exosquelette comprend au moins un moteur électrique (4) couplé à une partie de l'exosquelette (3) située en correspondance avec une partie affectée d'un membre d'un patient/utilisateur, et au moins un encodeur (5), ou un dispositif de mesure de mouvement similaire, couplé à une autre partie de l'exosquelette en coïncidence avec une partie non affectée de l'autre membre du patient ; et dans lequel ledit moteur (4) et ledit encodeur (5) sont pourvus de moyens de telle sorte qu'ils peuvent être reliés à une commande électronique avec un logiciel spécifique de telle sorte que le mouvement effectué par l'utilisateur avec sa partie non affectée, qui est détecté et mesuré dans l'encodeur (5), est reproduit dans la partie affecté par le biais du moteur (4) de celui-ci,
**caractérisé en ce que** le véhicule entraîné par moteur (2) comprend un dispositif d'élévation comprenant un système d'ancrage (6) attaché à un système de levage (7), dans lequel le système de levage (7) comprend une chaîne configurée pour déplacer le système d'ancrage (6) verticalement, et le système d'ancrage (6) est configuré pour ancrer l'exosquelette (3), aidant ainsi l'utilisateur lors du passage entre une position debout et une position assise ;
et en outre **en ce que** le véhicule entraîné par moteur (2) comprend un tapis roulant extensible non entraîné par moteur (8) configuré pour être stocké sous ledit véhicule entraîné par moteur (2) lorsqu'il n'est pas utilisé.

2. Appareil de rééducation selon la revendication 1, dans lequel le véhicule entraîné par moteur (2) comprend des batteries et des éléments électriques qui sont reliés à l'exosquelette (3) pour l'alimentation de puissance et le fonctionnement.

3. Appareil de rééducation selon l'une quelconque des revendications précédentes, dans lequel le véhicule entraîné par moteur (2) comprend un dispositif d'affichage (9) disposé faisant face à l'utilisateur, une fois qu'il/elle est assis(e) sur le véhicule (2), pour visualiser les mouvements en temps réel.

4. Appareil de rééducation selon l'une quelconque des revendications précédentes, dans lequel l'exosquelette (3) est une structure qui englobe aussi bien les membres inférieurs que les membres supérieurs de l'utilisateur.

5. Appareil de rééducation selon la revendication 4, dans lequel l'exosquelette (3) comprend un ou plusieurs moteurs (4) reliés à un ou plusieurs encodeurs (5) et plusieurs moyens de fixation (11) pour fixer le patient à l'exosquelette, au niveau des épaules, de la taille, des poignets, et des chevilles, afin de fixer chacun des membres du patient à celui-ci.

6. Appareil de rééducation selon la revendication 5, dans lequel l'exosquelette (3) comprend :
- un encodeur d'épaule (51) dans un membre supérieur qui commande un moteur d'épaule (41) dans l'autre membre supérieur,
- un encodeur de coude (52) dans un membre supérieur qui commande un moteur de coude (42) dans l'autre membre supérieur,
- un encodeur de poignet (53) dans un membre supérieur qui commande un moteur de poignet (43) dans l'autre membre supérieur,
- un encodeur de main (54) dans un membre supérieur qui commande un moteur de main (44) dans l'autre membre supérieur,
- un encodeur de hanche (55) dans un membre inférieur qui commande un moteur de hanche (45) dans l'autre membre inférieur,
- un encodeur de genou (56) dans un membre inférieur qui commande un moteur de genou (46) dans l'autre membre inférieur, et
- un encodeur de cheville (57) dans un membre inférieur qui commande un moteur de cheville (45) dans l'autre membre inférieur, ou
- une combinaison de n'importe lesquels des encodeurs et des moteurs mentionnés ci-dessus.

7. Appareil de rééducation selon la revendication 5, dans lequel l'exosquelette (3) comprend un ou deux encodeurs (5) situés dans un membre qui commandent un ou plusieurs moteurs (4) situés dans les autres membres, qu'il s'agisse des membres supérieurs ou inférieurs.

8. Appareil de rééducation selon l'une quelconque des revendications précédentes, comprenant en outre des moyens de fixation constitués d'un harnais (12) couplé à une élingue (13).
